**Europäisches Patentamt**

**European Patent Office**

**Office européen des brevets**

(19)

(11) Veröffentlichungsnummer : **0 351 713 B1**

(12)

# EUROPÄISCHE PATENTSCHRIFT

(45) Veröffentlichungstag der Patentschrift :
**10.06.92 Patentblatt 92/24**

(51) Int. Cl.⁵ : **G01B 11/00,** G01B 7/00

(21) Anmeldenummer : **89112800.1**

(22) Anmeldetag : **13.07.89**

(54) Verfahren und Einrichtung für den Betrieb eines Tastkopfes vom schaltenden Typ.

(30) Priorität : **20.07.88 DE 3824548**

(43) Veröffentlichungstag der Anmeldung :
**24.01.90 Patentblatt 90/04**

(45) Bekanntmachung des Hinweises auf die
Patenterteilung :
**10.06.92 Patentblatt 92/24**

(84) Benannte Vertragsstaaten :
**CH DE ES FR GB IT LI NL SE**

(56) Entgegenhaltungen :
**EP-A- 0 136 778**
**EP-A- 0 242 710**
**FR-A- 2 468 875**
**GB-A- 2 005 022**

(73) Patentinhaber : **Firma Carl Zeiss**
**W-7920 Heidenheim (Brenz) (DE)**
(84) **CH DE ES FR IT LI NL SE**

Patentinhaber : **CARL ZEISS-STIFTUNG**
**HANDELND ALS CARL ZEISS**
**W-7920 Heidenheim (Brenz) (DE)**
(84) **GB**

(72) Erfinder : **Enderle, Eckhard**
**Hutsteinweg 6**
**W-7080 Aalen-Dewangen (DE)**
Erfinder : **Aehnelt, Hans-Peter**
**Pulfrichstrasse 16**
**W-7082 Oberkochen (DE)**
Erfinder : **Aubele, Karl-Eugen**
**Brechhülbstrasse 4**
**W-7920 Gussenstadt (DE)**
Erfinder : **Wirth, Michael**
**Egerlandstrasse 1**
**W-7080 Aalen (DE)**

EP 0 351 713 B1

## Beschreibung

Die an Koordinatenmeßgeräten zur Vermessung der räumlichen Koordinaten ausgewählter Punkte des zu vermessenden Werkstücks verwendeten Tastkopfe lassen sich in zwei Kategorien einteilen; in solche vom "messenden" Typ und in solche vom sogenannten "schaltenden" Typ. Während Tastköpfe vom messenden Typ ein der Auslenkung ihres Tasters bzw. Taststifts proportionales Signal abgeben, liefern Tastköpfe vom schaltenden Typ ein impulsformiges Signal in dem Moment, in dem der Taster das zu vermessende Werkstück beruhrt. Diese schaltenden Tastköpfe sind in der Regel so aufgebaut, daß ein Vorspannorgan den Lagerkörper, an dem der Taststift befestigt ist, in eine die Nullage des Taststiftes eindeutig bestimmende Lagerung am feststehenden Teil des Tastkopfes drückt. Während des Antastvorganges wird dann der Taster gegen die Kraft des Vorspannorganes aus seinem Lager ausgehoben und kehrt nach Beendigung des Antastvorganges wieder in dieses zurück. Bei bekannten schaltenden Tastern besteht diese Lagerung in der Regel aus einer Dreipunktauflage, wobei jeweils einer von drei zylindrischen Armen am Lagerkörper des Tasters in eine durch ein Kugelpaar gebildeten V-Nut im Gehause des Tastkopfes aufliegt. Tastköpfe mit einer derartigen statisch bestimmten Lagerung sind unter anderem in der US-A-41 53 998 beschrieben.

Für die Erzeugung des Antastsignals sind in dem bekannten Tastkopf elektrische Kontakte in den Lagerstellen vorgesehen. Es ist jedoch auch bekannt, den Antastimpuls durch einen separaten piezoelektrischen Sensor zu generieren. Ein Tastkopf mit einem solchen Sensor ist beispielsweise in der US-A-41 77 568 beschrieben.

Die Genauigkeit, mit der die Taster in den genannten Tastköpfen vom schaltenden Typ nach einem Antastvorgang in seine Nullage zurückkehrt, wird in erheblichem Maße von der Reibung in den Lagerstellen des Tasters bestimmt. Um diese Reibung zu verringern werden daher die Lagerstellen üblicherweise gefettet bzw. geölt. Es verbleibt dennoch ein Restfehler, um den die Tastkugel von ihrer Nullage abweicht. Dieser Fehler hängt auch von der Taststiftlänge, dem Durchmesser der Lagerung und der Vorspannkraft ab, die auf das Lager wirkt. In handelsüblichen Tastern besitzt dieser Einstellfehler Werte zwischen 0,2 Mikrometer und 0,5 Mikrometer.

Auch bei messenden Tastköpfen kann ein derartiger Einstellfehler auftreten, wenn auch in geringerem Ausmaße. Denn in messenden Tastköpfen ist der Taststift ebenfalls in irgendeiner Form mechanisch in seiner Nullage gefesselt.

Vereinzelt können auch größere Abweichungen von der Nullage auftreten. Es kann dann sogar der Fall eintreten, daß die als Schalter wirkenden Kontakte im Lager offenbleiben. Es ist bereits vorgeschlagen worden, derartigen selten auftretenden Fehlerzuständen durch eine Einrichtung abzuhelfen, die bei offen gebliebenen Lagerkontakt einen mechanischen Stoß auf den Taststift ausübt. Mit diesen, in der DE-A-36 23 614 beschriebenen Maßnahmen werden jedoch nur die wenigen vielleicht einmal unter mehreren tausend Antastvorgängen auftretenden Störungen beseitigt. Eine generelle Verbesserung der LagergenauigkeitLläßt sich hiermit nicht erzielen.

In der EP-A-0 242 710 ist ein schaltender Tastkopf beschrieben, der ein piezoelektrisches Element zur Erzeugung des Antastsignals enthält. Das gleiche piezoelektrische Element soll außerdem zur Erzeugung einer mechanischen Schwingung dienen, wenn das Signal aus dem Lager des Taststifts ausbleibt, d.h. wenn der Lagerkontakt offenbleibt, und ist hierzu an eine Wechselspannungsquelle angeschlossen, die in dem genannten Falle erregt wird. Zum Signalverlauf der erregenden Wechselspannung sind keine näheren Angaben gemacht.

Aus der DE-B-28 41 424 ist ein Tastkopf mit einem piezoelektrischen Schwinger bekannt, der das freie Ende des Tasters dauernd mit geringer Amplitude oszillieren läßt. Dieser bekannte Tastkopf wird so betrieben, daß ein zweiter, separater Wandler die Amplitude der Schwingung detektiert. Es ist dann möglich, den Antastzustand durch den zweiten Wandler zu erkennen und ein entsprechendes Signal zu erzeugen, weil die Amplitude der Tasterschwingung während des Kontaktes des Tasters mit dem Werkstück gestört bzw. gedämpft wird.

Das Problem der Lagerreibung und mangelnder Rückstellgenauigkeit ist hier nicht angesprochen, vielmehr wird lediglich eine Meßgenauigkeit von + - 1 Mikrometer für diesen bekannten Tastkopf spezifiert. Für hochgenaue Anwendungen in der Koordinatenmeßtechnik ist diese Meßunsicherheit von + - 1 Mikrometer nicht ausreichend.

Es ist die Aufgabe der vorliegenden Erfindung ein Verfahren und eine Vorrichtung für den Betrieb eines Tastkopfes vom schaltenden Typ anzugeben, mit denen sich die Nullage des Tasters nach jedem Antastvorgang möglichst genau reproduzieren läßt.

Diese Aufgabe wird mit den im Kennzeichen der Ansprüche 1 bzw. 2 angegebenen Maßnahmen gelöst.

Die Erfindung macht von der Erkenntnis Gebrauch, daß es möglich ist, die Lagerreibung zu überwinden, indem der Taster durch Vibrationen sozusageri in sein Läger "hineingerüttelt" wird. Erfindungsgemäß findet dieses "Hineinrütteln" nach jedem Antastvorgang statt, wozu eine Elektronik vorgesehen ist, die einen piezo-

2

elektrischen Schwinger nach jedem Antastvorgang während einer vorbestimmten Zeitspanne mit Wechselspannung beaufschlagt.

Die Effektivität dieser Maßnahme ist davon abhängig, daß die Oszillatorfrequenz zumindest in der Nähe der mechanischen Eigenfrequenz des Tasters liegt. Da letztere beispielsweise nach einem Auswechseln des Tasters sich ändern kann, ist es vorteilhaft, wenn der Frequenzgenerator ein Frequenzspektrum liefert, beispielsweise ein weißes Rauschen, so daß die mechanische Eigenfrequenz des Tasters auf jeden Fall immer angeregt wird.

Eine besonders gute Reproduzierung der Nullage des Tasters ergibt sich dann, wenn die Amplitude der Schwingung des Oszillators so gesteuert wird, daß sie nach dem Einschalten langsam abklingt.

Es ist natürlich immer möglich, einen separaten piezoelektrischen Schwinger für die angesprochene Aufgabe vorzusehen. Wenn der Tastkopf jedoch bereits einen piezoelektrischen Sensor für die Erzeugung des Antastsignales besitzt, dann kann dieser vorteilhaft im umgekehrten Betrieb auch zur Erzeugung der Schwingungen verwendet werden. Diese Lösung ist besonders vorteilhaft, weil dann allein Eingriffe in die Elektronik des Tastkopfes, jedoch keine mechanischen Änderungen am Tastkopf selbst erforderlich sind.

Mit den erfindungsgemäßen Maßnahmen läßt sich der Fehler in der Lagerreproduzierbarkeit von schaltenden Tastköpfen auf Werte unter 0,2 Mikrometer verringern.

Weitere Vorteile der Erfindung ergeben sich aus der nachfolgenden Beschreibung von Ausführungsbeispielen anhand der Figuren 1-6 der beigefügten Zeichnungen:

Fig. 1 ist eine Prinzipsskizze eines Tastkopfes vom schaltenden Typ in einer die Tasterlängsachse enthaltenden Ebene;

Fig. 2 zeigt den Tastkopf aus Fig. 1 im Schnitt entlang der Linie II/II in Fig. 1;

Fig. 3 ist eine perspektivische Prinzipsskizze des beweglichen Tasters (5/6) aus Fig. 1 mit der an ihn angeschlossenen Elektronik;

Fig. 4 ist die Prinzipsskizze eines alternativen Ausführungsbeispiels für das bewegliche Tastelement und die angeschlossene Elektronik;

Fig. 5 ist ein Prüfdiagramm, das die Lagerreproduzierbarkeit für den Taststift (6) des Tastkopfes aus Fig. 1-3 zeigt;

Fig. 6 ist ein Diagramm, in dem der zeitliche Verlauf verschiedener Signale der Elektronik (14) aus Fig. 3 dargestellt sind.

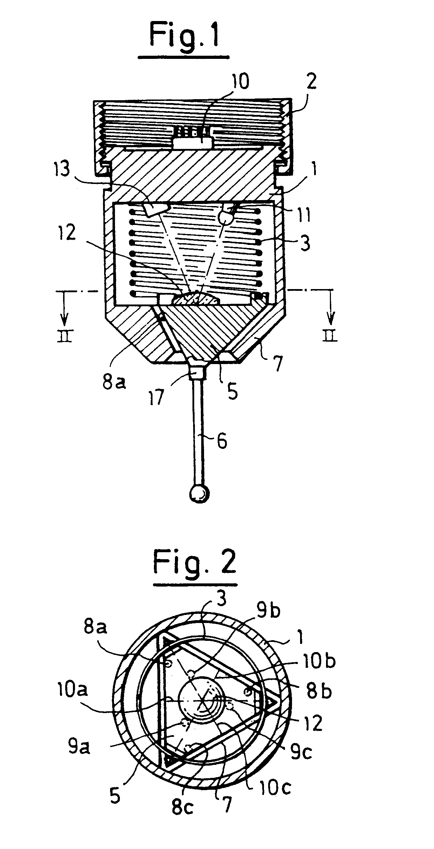

Der in Fig. 1 dargestellte Tastkopf besitzt ein zylindrisches Gehäuse (1), das mit Hilfe einer Überwurfmutter (2) direkt oder über ein Verlängerungsstück am Meßarm eines Koordinatenmeßgerätes befestigt werden kann. Stirnseitig ist das Gehäuse (1) mit einer Steckerbuchse (10) versehen, auf dessen Kontaktstifte die verschiedenen elektrischen Anschlüsse des Tastkopfes gelegt sind.

Am entgegengesetzten Ende verjüngt sich das Gehäuse (1) konisch. Dort geht das Gehäuse in ein Lagerteil (7) über, das den Träger (5) für den beweglichen Taststift (6) des Tastkopfes aufnimmt. Das in der Lagerung (7) gehaltene Teil (5) wird durch eine Feder (3) in seine Nulllage gedrängt.

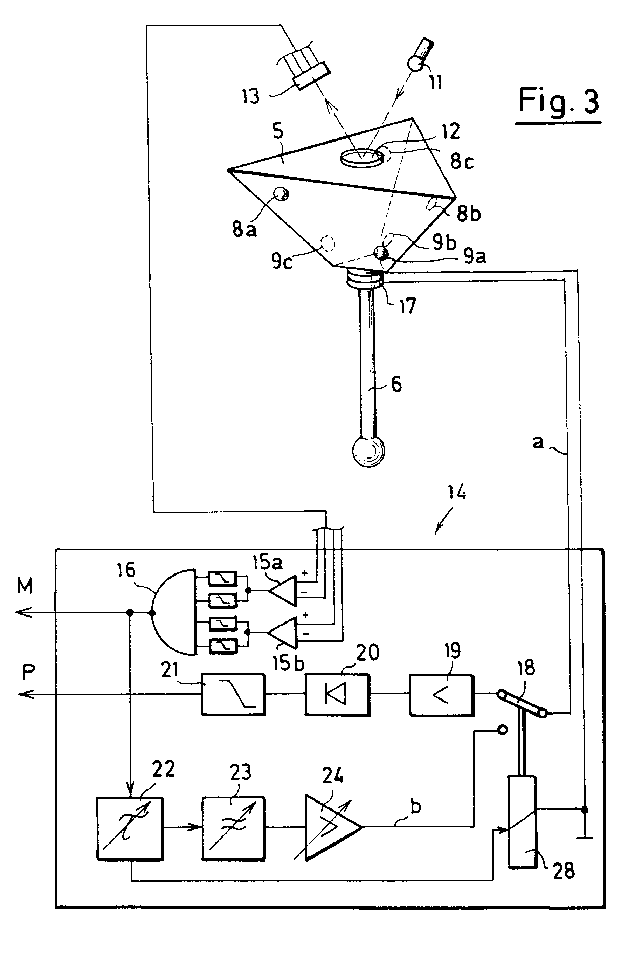

Wie aus der Schnittzeichnung nach Fig. 2 und der perspektivischen Darstellung in Fig. 3 hervorgeht, besitzt der Träger (5) des Taststifts (6) die Form eines dreiseitigen Pyramidenstumpfes, der an sechs diskreten Auflagepunkten auf entsprechend geformten Gegenflächen der Lagerung (7) am unteren Teil des Gehäuses (1) aufliegt. Die Auflagepunkte sind durch konvexe Erhebungen an dem Teil (5) gebildet. Sie sind in den Figuren 2 und 3 mit (9a-c) und (8a-c) bezeichnet.

Eine ausführlichere Beschreibung der Lagerung für den Taststift findet sich in der am gleichen Tage von der Anmelderin eingereichten Anmeldung mit dem Titel "Lagerung für Tastköpfe".

Zur sicheren und von Umgebungseinflüssen wie Vibrationen etc. unbeeinflußten Erkennung eines Antastvorganges besitzt der in Fig. 1-3 dargestellte Tastkopf zwei Sensoren. Ein piezoelektrischer Sensor (17) ist zwischen den Lagerkörper (5) und den Taststift (6) geschaltet. Dieser piezoelektrische Sensor (17) liefert im Moment der Berührung des Taststifts (6) mit einem Werkstück ein Signal, welches dazu dient, die von den Längenmeßeinrichtungen an den Führungen des Koordinatenmeßgerätes gelieferten Meßwerte im Moment der Antastung festzuhalten. Eine gültige Antastung liegt jedoch nur dann vor, wenn danach das Tastelement (5/6) auch tatsächlich aus seinem Lager ausgehoben wird. Zu diesem Zwecke sind eine Leuchtdiode (11) und eine Vierquadrantendiode (13) am feststehenden Gehäuse (1) des Tastkopfes, sowie eine Spiegellinse (12) auf der Oberseite des Teils (5) vorgesehen. Letztere bildet die Leuchtfläche der Leuchtdiode (11) auf die Quadrantendiode (13) ab. Das Signal dieser Einrichtung dient dazu, das im Zuge eines Antastvorganges entstehende, erste Signal des piezoelektrischen Sensors (17) zu verifizieren. Die durch das erste Signal des piezoelektrischen Sensors (17) festgehaltenen Längenmeßwerte werden nur dann als Antastkoordinaten erkannt und an den Rechner des Koordinantenmeßgerates weitergegeben, wenn auf das Signal des Sensors (17) innerhalb einer festgelegten Zeitspanne ein von der Einrichtung (11-13) geliefertes zweites Signal kommt.

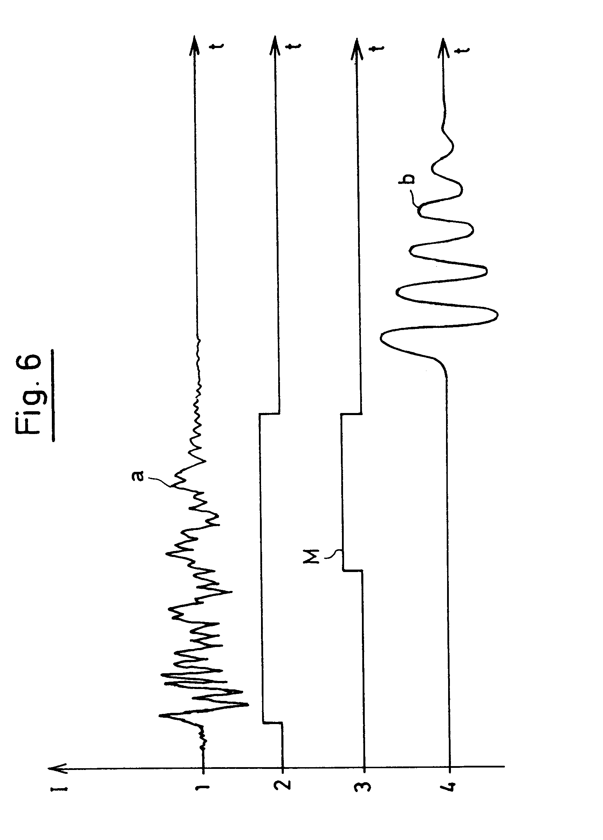

Die Elektronik, in der die beiden Signale des Tasters verarbeitet werden, ist mit (14) bezeichnet. Sie enthält einen Verstärker (19), an den der piezoelektrische Sensor (17) über einen Umschalter (18) angeschlossen ist. Der Ausgang des Verstärkers (19) ist einem integrierenden Gleichrichter (20) zugeführt und dessen Ausgang ist an einen Komparator (21) mit einstellbarer Triggerschwelle angeschlossen. Der Komperator liefert also ein Signal P sobald im Zuge eines Antastvorganges das Signal des piezoelektrischen Sensors (17) den Rauschpegel übersteigt. Das vom Sensor (17) abgegebene Signal ist in dem Diagramm nach Fig. 6 mit a bezeichnet.

Die Vierquadrantendiode (13) ist mit ihren paarweise einander gegenüberliegenden photoempfindlichen Teilflächen an zwei Differenzverstärker (15a,15b) angeschlossen. Deren Ausgänge werden durch ein "oder"-Gatter miteinander verknüpft. Somit entsteht das in Fig. 6 mit M bezeichnete Signal, sobald im Zuge eines Antastvorganges der Taststift (5/6) ausgelenkt wird und der auf die Quadrantendiode (13) abgebildete Leuchtfleck der Photodiode (11) aus ihrer Mittellage auswandert.

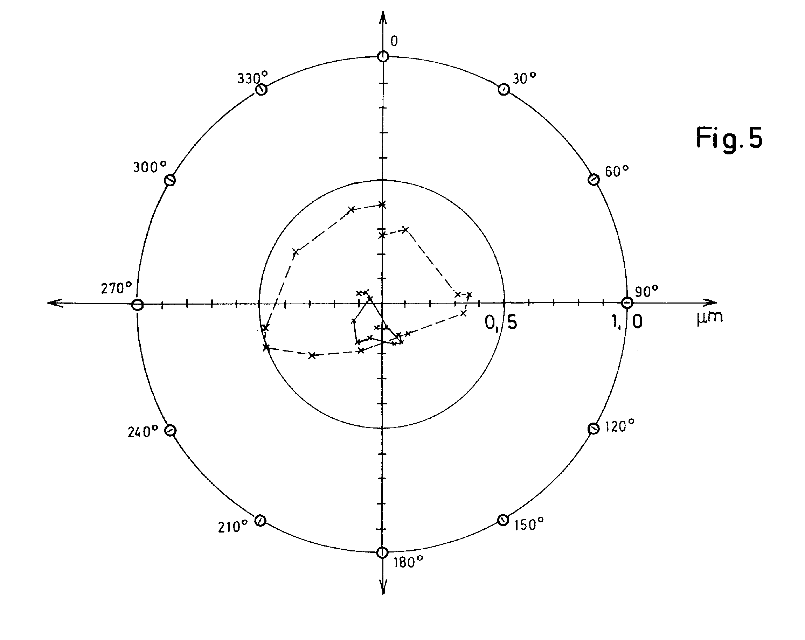

Im Testdiagramm nach Fig. 5 ist dargestellt, mit welcher Genauigkeit der bewegliche Teil (5/6) des Tastkopfs (1) nach einem Antastvorgang wieder in sein Lager zurückkehrt. Hierzu wurde der Taststift (6) unter verschiedenen Antastwinkeln in der Ebene senkrecht zur Taststiftlängsachse in Schritten von 30° ausgelenkt. Mittels eines Autokollimationsfernrohres wurde dann gemessen, welche Position die Tastkugel am Ende des Taststiftes nach Beendigung des Antastvorganges wieder eingenommen hatte. Das Ergebnis zeigt die in Fig. 5 gestrichelt gezeichnete Linie, die die Meßpunkte miteinander verbindet. Danach liegt die Lagerreproduzierbarkeit der Tastkugel in einem Bereich zwischen ±0,4 und ±0,5 μm.

Zur Verbesserung der Lagerreproduzierbarkeit enthält die in Fig. 3 dargestellte Elektronik (14) einen Zeitgeber (22), der von der abfallenden Flanke des Signals M gesteuert eine einstellbaren Zeitspanne nach Beendigung eines Antastvorganges den in Fig. 3 vereinfacht als Relais (28/18) gezeichneten Umschalter betätigt und einen Oszillator (23) kurzzeitig einschaltet. Der Oszillator (23) ist auf die mechanische Eigenfrequenz des Tasters (5/6) abgestimmt. Diese liegt im beschriebenen Ausführungsbeispiel bei etwa 70 kHz. Das über einen nachgeschalteten Verstärker (24) auf eine Amplitude von ca. 5 V gebrachte Signal des Oszillators (23) wird über den Umschaltkontakt (18) dem piezoelektrischen Sensor (17) aufgeschaltet, der danach mit dieser Frequenz von ca. 70 kHz schwingt und den Taster (5/6) vibrieren läßt. Der zeitliche Verlauf dieser Schwingung ist im Diagramm nach Fig. 6 mit b bezeichnet. Daraus ist ersichtlich, daß die Vibrationen nach dem Einschalten des Oszillators (23) langsam abklingen. Die gesamte Zeitspanne, während der der Taststift schwingt, dauert ca. 100 ms.

Aufgrund dieser Vibrationen kehrt der Taster (5/6) mit höherer Genauigkeit in seine Nulllage zurück. Die Lagerreproduzierbar keit eines solchen kurzzeitig zum Vibrieren angeregten Tastkopfes zeigt die durchgezogene Linie im Diagramm nach Fig. 5. Die von ihr verbundenen Meßpunkte liegen deutlich innerhalb eines Bereiches von ±0,2 μm. Dies läßt sich so erklären, daß aufgrund der Vibrationen die Lagerreibung herabgesetzt wird, wodurch der Taster (5/6) mit einer um den Faktor 3 höheren Genauigkeit in seine Nulllage zurückkehrt.

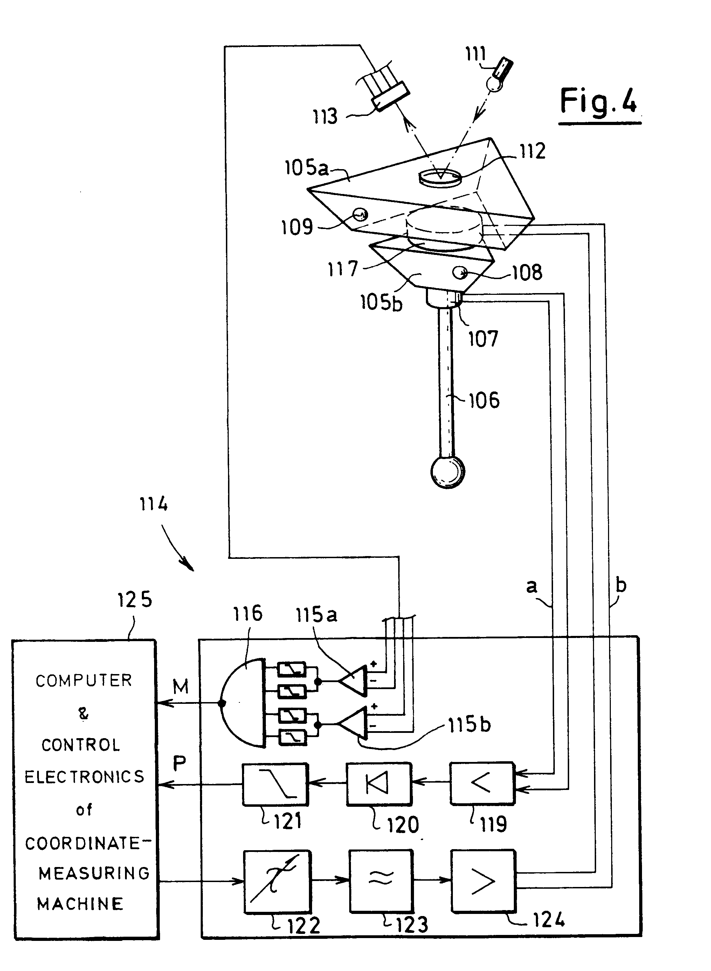

In Fig. 4 ist ein weiteres, leicht modifiziertes Ausführungsbeispiel der Erfindung dargestellt. Hier ist der Lagerkörper (105) des Tasters zweigeteilt und es ist außer dem piezoelektrischen Sensor (107) ein zweites piezoelektrisches Element (117) zwischen die beiden Hälften (105a,105b) des Lagerkörpers gesetzt.

Während die Signalverarbeitung für den Sensor (107) und die photoelektrische Einrichtung (111/112/113) wie im Ausführungsbeispiel nach Fig. 3 erfolgt und deshalb hier nicht noch einmal beschrieben wird, ist die zur Erzeugung der Vibrationen verwendete Schaltung leicht abgeändert. Der Zeitgeber (122) der Elektronik (114) erhält sein Startsignal von der Steuerelektronik (125) des Koordinatenmeßgerätes. Der Zeitgeber (122) schaltet während einer vorbestimmten Zeitspanne einen Oszillator (123) ein, der ein Rauschspektrum liefert. Dieses Rauschspektrum ist so gewählt, daß es verschiedene mechanische Eigenfrequenzen des Tasters (105/106) enthält. Veränderte Eigenfrequenzen können sich beispielsweise nach einem Austausch des Taststifts (106) ergeben.

Über den Verstärker (124) wird dieses Rauschspektrum direkt dem zweiten piezoelektrischen Element (117) aufgeschaltet, das dann den Taster (105/106) während der durch den Zeitgeber (122) festgelegten Zeitspanne nach jedem Antastvorgang vibrieren läßt.

Der Vorteil dieser Lösung ist einmal darin zu sehen, daß mit geringeren Schwingungsamplituten gearbeitet werden kann, aufgrund der effektiveren Übertragung der mechanischen Schwingungen in das Lager des Tasters. Außerdem kann die Umschalteinrichtung entfallen, da jedes der beiden piezoelektrischen Elemente nur in einer einzigen Betriebsweise, das piezoelektrische Element (107) als Signalgeber und das piezoelektrische Element (117) als Schwinger, betrieben wird.

## Patentansprüche

1. Verfahren zur exakten Rückstellung des Tasters (5, 6) eines Tastkopfes in seine die Nullstellung definierende Lagerung, wobei der Taster (5, 6) nach jedem Antastvorgang während einer vorbestimmten Zeit-

EP 0 351 713 B1

spanne (t) in Schwingungen versetzt wird und hierzu entweder durch eine Schwingung auf der mechanischen Eigenfrequenz des Tasters (5, 6) oder durch ein Frequenzspektrum (Rauschen) angeregt wird, welches die mechanische Eigenfrequenz des Tasters (5, 6) enthält und die Amplitude der Schwingung so gesteuert wird, daß sie nach dem Einschalten langsam abklingt.

2. Vorrichtung zur Durchführung des Verfahrens nach Anspruch 1, wobei der Taster mit einem piezoelektrischen Schwinger (17, 107) verbunden ist, der an eine Anordnung (14, 114) angeschlossen ist, der ein vom Antastsignal (a) des Tastkopfs (1) abgeleitetes Signal zugeführt ist und die ein Zeitglied (22, 122) enthält, welches einen Oszillator (23, 123) nach jedem Antastvorgang während einer vorbestimmten Zeitspanne (t) mit einer zeitlich abklingenden Amplitude schwingen läßt.

3. Vorrichtung nach Anspruch 2, wobei der Oszillator (23, 123) ein Frequenzspektrum als Ausgangssignal liefert.

4. Vorrichtung nach Anspruch 2, wobei der gleiche piezoelektrische Schwinger (17) sowohl das Antastsignal (a) im Moment der Berührung des Tasters-(5, 6)-mit-dem Werkstück als auch die Schwingung zur Rückstellung des Tasters in die Nullstellung erzeugt und eine Umschalteinrichtung (18, 28) vorgesehen ist, die den piezoelektrischen Schwinger wechselweise entweder mit einer Anordnung (19-21) zur Antastsignalerzeugung oder dem Oszillator (23) verbindet.

5. Vorrichtung nach Anspruch 2, wobei der Lagerkörper des Tasters aus zwei Teilen (105a, 105b) besteht und der piezoelektrische Schwinger (117) zur Rückstellung des Tasters in die Nullstellung zwischen die beiden Teile gesetzt ist.

## Claims

1. A method for reseating exactly the probe (5, 6) of a probe head into a bearing defining its zero position, wherein the probe (5/6) is placed in oscillation for a predetermined period of time (t) after each contacting process and is excited either by an oscillation at the natural frequency of mechanical resonance of the probe (5, 6) or by a frequency spectrum (noise) which contains said natural frequency, and wherein the amplitude of the oscillation is so controlled as to slowly reduce after each excitation.

2. A device for operating the method of claim 1, wherein the probe (17, 107) is fastened to a piezoelectric oscillator, which is connected itself to a circuit means (14, 114) receiving a signal produced from the contact signal (a) of the probe head (1), and wherein said circuit means comprises timer means (22, 122) for starting an oscillator circuit (23, 123) after each contact process to oscillate for a predetermined period of time (t) with decaying amplitude.

3. The device of claim 2, in which said oscillator circuit (23, 123) generates a frequency spectrum as the output signal.

4. The device of claim 2, wherein said piezoelectric oscillator is a single element producing in a first mode the work-contact signal (a) upon contact between probe (5, 6) and the work-piece and producing in a second mode the mechanical oscillation for reseating the probe into its zero position and wherein switching means are provided for sequentially connecting said piezoelectric oscillator either to a device (9-21) for producing the probe signal or to an oscillator circuit (23).

5. The device of claim 2, in which said probe comprises a two-part seating base and in which said piezoelectric oscillator for reseating said probe is interposed between each of the two parts of said seating base.

## Revendications

1. Procédé pour ramener de façon précise l'organe de palpage (5,6) d'un palpeur dans son logement définissant la position zéro et selon lequel l'organe de palpage (5,6) est mis en vibrations après chaque opération de palpage, pendant un intervalle de temps prédéterminé (t) et, à cet effet, est excité soit au moyen d'une oscillation à la fréquence mécanique propre de l'organe de palpage (5,6), soit au moyen d'un spectre de fréquences (bruit), qui contient la fréquence mécanique propre de l'organe de palpage (5,6), et selon lequel l'amplitude de l'oscillation est commandée de manière à diminuer lentement après son déclenchement.

2. Dispositif pour la mise en oeuvre du procédé selon la revendication 1, dans lequel l'organe de palpage est raccordé à un oscillateur piézoélectrique (17,107), qui est raccordé à un dispositif (14,114), auquel est envoyé un signal dérivé du signal de palpage (a) du palpeur (1) et qui contient une minuterie (22,122), qui fait osciller un oscillateur (23,123) après chaque opération de palpage, pendant un intervalle de temps prédéterminé (t), avec une amplitude qui diminue dans le temps.

3. Dispositif selon la revendication 2, dans lequel l'oscillateur (23,123) délivre un spectre de fréquences

5

en tant que signal de sortie.

4. Dispositif selon la revendication 2, dans lequel le même oscillateur piézoélectrique (17) produit aussi bien le signal de palpage (a) au moment du contact de l'organe de palpage (5,6) avec la pièce usinée que l'oscillation pour ramener l'organe de palpage dans la position zéro, et dans lequel il est prévu un dispositif de commutation (18,28), qui raccorde l'oscillateur piézoélectrique alternativement à un dispositif (19-21) pour produire le signal de palpage, ou l'oscillateur (23).

5. Dispositif selon la revendication 2, dans lequel le corps de support de l'organe de palpage est constitué de deux parties (105a, 105b), et l'oscillateur piézoélectrique (117) est positionné de manière à ramener l'organe de palpage dans la position zéro entre les deux parties.

# Fig.1

# Fig. 2

Fig. 3

Fig.4

Fig.5

EP 0 351 713 B1

# Fig. 6

EP 0 351 713 B1